Europäisches Patentamt

European Patent Office

Office européen des brevets

(19)

(11) Veröffentlichungsnummer: **0 391 310**
**A2**

## (12) EUROPÄISCHE PATENTANMELDUNG

(21) Anmeldenummer: **90106286.9**

(22) Anmeldetag: **02.04.90**

(51) Int. Cl.5: **B25J 18/02, B25J 18/04**

(30) Priorität: **03.04.89 DE 3910692**

(43) Veröffentlichungstag der Anmeldung:
**10.10.90 Patentblatt 90/41**

(84) Benannte Vertragsstaaten:
**AT CH DE ES FR GB IT LI NL SE**

(71) Anmelder: **IEF WERNER GMBH**
**Schulstrasse 7**
**D-7743 Furtwangen-Neukirch(DE)**

(72) Erfinder: **Bär, Manfred**

**Adolf-Heer-Strasse 14**
**D-7741 Vöhrenbach(DE)**
Erfinder: **Meyer, Andreas, Dipl.-Ing. (FH)**
**Buchenweg 8**
**D-7743 Furtwangen(DE)**

(74) Vertreter: **Patentanwälte Dipl.-Ing. Klaus**
**Westphal Dr. rer. nat. Bernd Mussgnug Dr.**
**rer.nat. Otto Buchner**
**Waldstrasse 33**
**D-7730 VS-Villingen-Schwenningen(DE)**

(54) **Linear- und Dreheinheit.**

(57) Die Erfindung betrifft eine kombinierte Linear-
und Dreheinheit mit einem Grundkörper (10), an
dem ein Schlitten (11) mit einem Hohlprofil verfahrbar ist. Innerhalb des Hohlprofils ist eine Drehachse
(12) angeordnet, die von einem Drehantrieb (13) am
Ende des Schlittens angetrieben ist. Diese Anordnung führt zu einer vorteilhaften, besonders leichten
und kompakten Bauweise der Linear- und Dreheinheit.

Fig. 1

EP 0 391 310 A2

## Linear- und Dreheinheit

Die Erfindung betrifft eine Lineareinheit mit einem Grundkörper, an dem ein Schlitten mit einem Hohlprofil verfahrbar ist.

Eine Lineareinheit dieser Art ist aus der DE 30 48 572 A1 bekannt. Hierbei ist ein Rohr mittels eines Zahnriementriebes in Längsrichtung verfahrbar. An den beiden stirnseitigen Enden des Rohres sind drehbewegliche Greifereinheiten vorgesehen, deren Antriebsmotoren innerhalb des Rohres angeordnet sind.

Insbesondere bei automatisierten Fertigungsabläufen sind vielfach kombinierte Linear- und Dreheinheiten erforderlich, die eine besonders kleine Baugröße aufweisen. Die Anordnung von Antriebsmotoren innerhalb eines Rohres führt zwar zu einer gewissen Platzeinsparung, jedoch ist hierbei ein relativ großer Rohrdurchmesser erforderlich. Darüber hinaus ergibt sich eine Einschränkung der Nutzlast, die von der kombinierten Linear- und Dreheinheit bewegt werden kann. Wird die Einheit als Z-Führung verwendet, so wird nämlich die Nutzlast durch das Gewicht des Schlittens und der Dreheinheit vermindert.

Die Aufgabe der Erfindung besteht demnach darin, eine kombinierte Linear- und Dreheinheit besonders leichter und kompakter Bauweise zu schaffen.

Erfindungsgemäß wird diese Aufgabe in überraschend einfacher Weise dadurch gelöst, daß bei einer gattungsgemäßen Linear-und Dreheinheit die Drehachse der Dreheinheit innerhalb des Hohlprofils des Schlittens angeordnet ist. Vorteilhafte Weiterbildungen der Erfindung sind in den Unteransprüchen gekennzeichnet.

Die Nutzung des Innenraums des Hohlprofils zur Aufnahme der Drehachse ist besonders vorteilhaft, da einerseits der Platzbedarf durch den Einbau der Drehachse in das Hohlprofil verringert wird und andererseits die Lagerung der Drehachse und deren Antrieb durch diese Geometrie leichter und platzsparender ausführbar sind.

In bevorzugter Ausführung ist der Schlitten mit seinem Hohlprofil so ausgebildet, daß die Dreheinheit mit der Drehachse und Drehantrieb auch nachträglich in den Schlitten integrierbar ist. Damit ist es möglich, eine Lineareinheit nachträglich in eine kombinierte Linear- und Dreheinheit umzurüsten.

In vorteilhafter Weiterbildung ist am Schlitten ein beidseitig eingespannter, feststehender Zahnriemen vorgesehen, der von einem Elektromotor über ein Antriebsritzel am Grundkörper antreibbar ist. Der Innenraum des Hohlprofils ist dabei vorzugsweise durch den Zahnriemen nach außen abgeschlossen. Dabei weist die Zahnseite des Zahnriemens nach innen und der Zahnriemen ist innerhalb des Grundkörpers mittels zweier Führungsrollen an das Antriebsritzel des Elektromotors angedrückt. Da der Zahnriemen mit seiner Zahnprofilierung nur im Bereich des Grundkörpers aus dem Hohlprofil abhebt, ist der Zahnriemen auf diese Weise vor Verschmutzung geschützt.

In bevorzugter Ausbildung sind an den beiden Seitenflächen des Hohlprofils Rundstangen vorgesehen, die in Laufbuchsen des Grundkörpers geführt sind. Dies führt bei einer leichten Bauweise zu einer besonders präzisen Führung.

Der Zahnriemen kann beidseitig mittels einer Spannplatte mit formschlüssig in den Zahnriemen eingreifender Zahnprofilierung durch eine Spannschraube an je einer Endplatte des Hohlprofils gehalten sein. Dabei wird der Zahnriemen an seinen beiden Enden in vorteilhafter Weise zusätzlich durch je eine Andruckplatte von außen an die Spannplatte angedrückt. Bei dieser Anordnung läßt sich der Zahnriemen in einfacher Weise einbauen und spannen. Werden an den beiden Enden des Grundkörpers Endschalter eingebaut, so können die Andruckplatten gleichzeitig als Schaltflächen für die Endschalter und damit zur Begrenzung der Hubbewegung genutzt werden.

Zur weiteren Gewichtsersparnis ist die Drehachse vorzugsweise als Hohlwelle ausgebildet. Deren Hohlraum kann zusätzlich als Durchführung für Kabel, Pneumatikleitungen oder ähnliches genutzt werden. In der Außenseite des Hohlprofils kann eine zusätzliche T-Nut vorgesehen sein, an der sich Anbauteile befestigen lassen oder die als zusätzlicher Kabelschacht verwendet werden kann, wenn diese nach außen durch ein Abdeckblech abgedeckt ist.

Die Drehachse ist in bevorzugter Ausbildung mit einer Zahnscheibe starr verbunden, die vom Antriebsritzel eines Elektromotors über einen Zahnriemen antreibbar ist. Der gewichtssparende Zahnriemenantrieb ermöglicht auch einen platzsparenden Aufbau, da der Elektromotor seitlich am Ende des Schlittens angeflanscht werden kann.

Die Drehachse ist in vorteilhafter Ausführung am Gehäuse des Drehantriebs, das mit dem Ende des Schlittens starr verbunden ist, mittels zweier Kugellager gelagert. Die Lagerung kann durch einen auf die Drehachse aufschraubbaren Innengewindering um einen in das Gehäuse einschraubbaren Außengewindering spielfrei eingestellt werden.

In zusätzlicher Weiterbildung kann auf der Drehachse eine Trapezspindel vorgesehen sein, von der eine Spindelmutter angetrieben ist. Die gegen Verdrehung gesicherte Spindelmutter setzt die Drehbewegung der Drehachse in eine Linearbewegung um. Zur Begrenzung des Drehwinkels der Drehachse können von der Spindelmutter betätigbare Endschalter vorgesehen sein. Diese Anordnung hat den Vorteil, daß eine zuverlässige Abschaltung auch bei Drehwinkeln, die größer als 360° sind, realisierbar ist.

Die Erfindung ist nachstehend anhand eines Ausführungsbei spiels, das in den Zeichnungen dargestellt ist, näher erläutert. Es zeigen:

Figur 1 eine Seitenansicht einer erfindungsgemäßen Linear- und Dreheinheit,

Figur 2 eine Aufsicht auf die Linear- und Dreheinheit gemäß Figur 1 von oben,

Figur 3 eine Teilansicht der Linear- und Dreheinheit gemäß Figur 1 nach Drehung um 90°,

Figur 4 einen Querschnitt der Lineareinheit gemäß Figur 2 in vergrößerter Darstellung (ohne Dreheinheit),

Figur 5 einen Schnitt durch das Antriebsritzel der Lineareinheit gemäß Figur 4,

Figur 6 einen Teilschnitt durch den Drehantrieb der Linear- und Dreheinheit gemäß Figur 2,

Figur 7 eine vergrößerte Darstellung der Einzelheit Z gemäß Figur 6,

Figur 8 eine Teilansicht des Endes der Antriebswelle gemäß Figur 7 und

Figur 9 eine teilweise geschnittene Ansicht des Drehantriebes gemäß Figur 6.

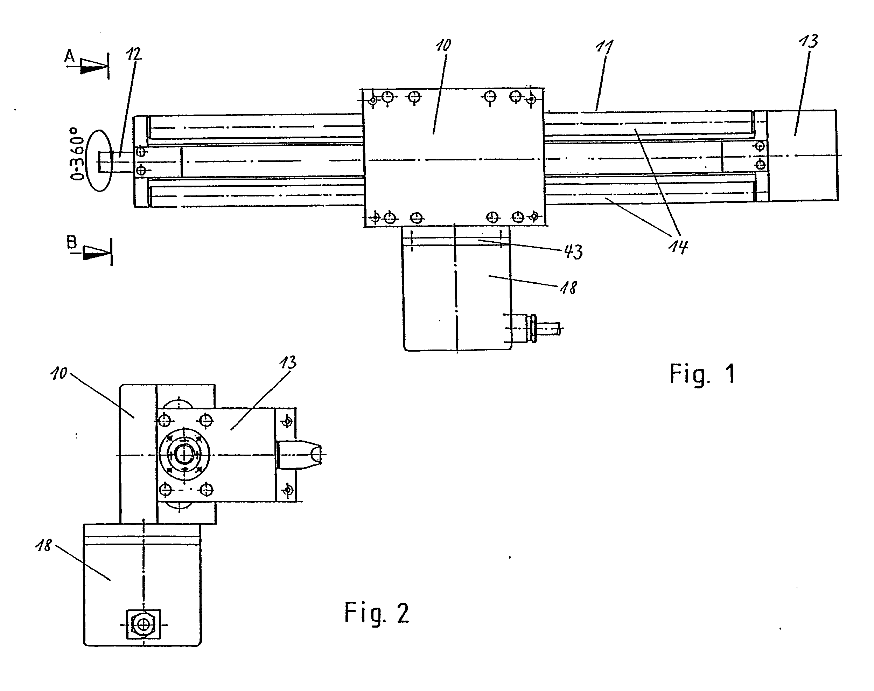

Der Linear- und Drehantrieb gemäß den Figuren 1 bis 3 weist einen Grundkörper 10 auf, in dem ein mittels eines Zahnriemens 33 verfahrbarer Schlitten 11 mit einem Hohlprofil 38 geführt ist. Innerhalb des Hohlprofils 38 ist eine über einen Drehantrieb 13 verdrehbare Drehachse 12 vorgesehen. An dem feststehenden Grundkörper 10 ist ein Elektromotor 18 zum Antrieb des Zahnriemens 33 über eine Zwischenflansch 43 befestigt. Durch den feststehenden Elektromotor 18 wird das Gewicht des Schlittens 11 verringert, so daß sich die bewegbare Nutzlast erhöht. An den beiden Stirnflächen des Grundkörpers 10 sind Endschalter 32 vorgesehen, die der Begrenzung der Linearbewegung des Schlittens 11 dienen. Da sowohl die Endschalter als auch der Elektromotor an dem feststehenden Grundkörper 10 vorgesehen sind, werden die elektrischen Zuleitungen von einem feststehenden Teil abgeführt, so daß keine Bruchgefahr wie bei bewegten Kabeln besteht.

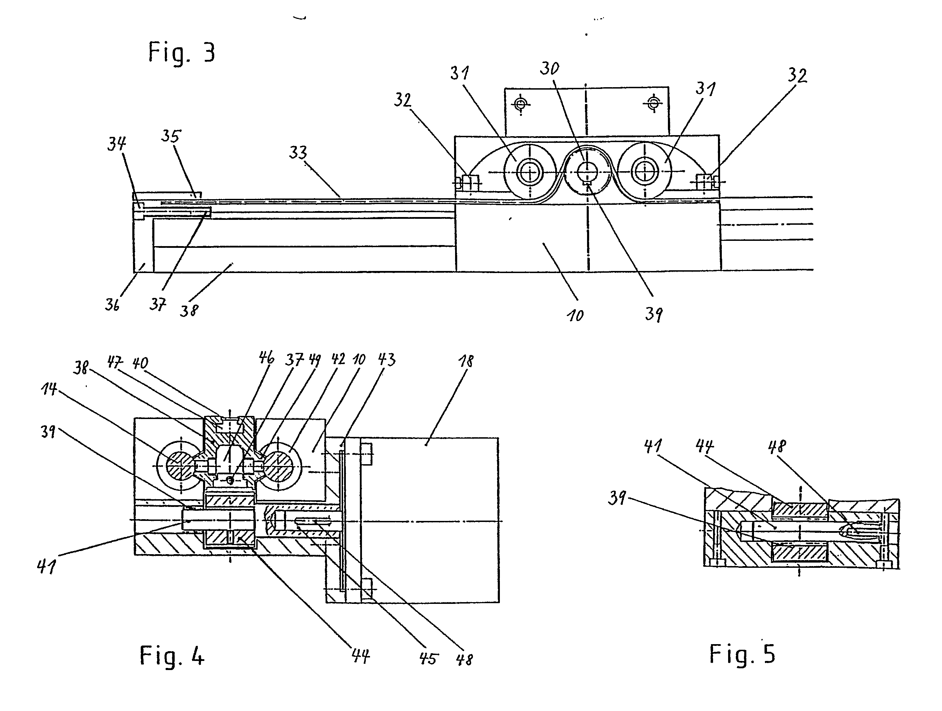

Das Hohlprofil 38 weist gemäß Figur 4 einen im wesentlichen rechteckigen Querschnitt auf, innerhalb dessen ein U-förmiger Innenraum 46 zur Aufnahme der Drehachse 12 vorgesehen ist (der Übersichtlichkeit halber ist die Drehachse 12 in Figur 4 nicht dargestellt). An den beiden Seitenflächen des Hohlprofils 38 sind prismenförmige Aufnahmen 49 vorgesehen, an deren Außenseiten Rundstangen 14 in nicht dargestellter Weise angeschraubt sind. Die Rundstangen 14 sind in Laufbuchsen 42 innerhalb des Grundkörpers 10 geführt.

Der Innenraum 46 des Hohlprofils 38, in dem die Drehachse 12 angeordnet ist, ist durch den beidseitig eingespannten Zahnriemen 33 nach außen abgeschlossen. Die Zahnseite des Zahnriemens 33 weist zum Innenraum 46 des Hohlprofils 38 und ist im Grundkörper 10 mittels zweier Führungsrollen 31 um das Antriebsritzel 30 des Elektromotors 18 umgelenkt. Dadurch hebt der Zahnriemen 33 nur im Bereich des Grundkörpers 10 aus dem Hohlprofil 38 ab und ist somit vor Verschmutzung geschützt.

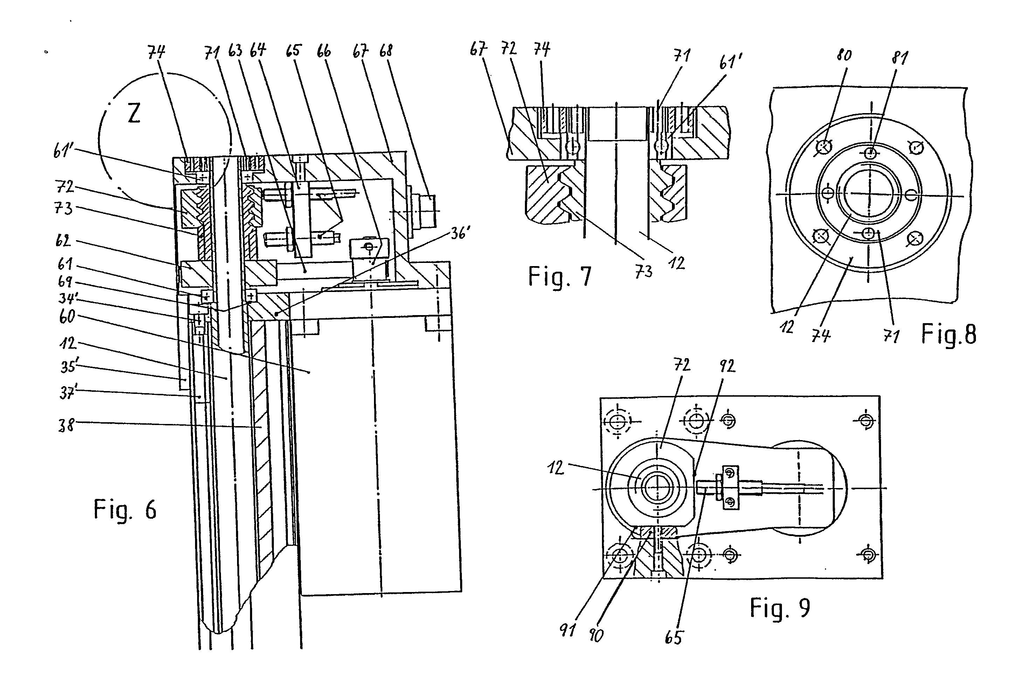

Der Zahnriemen 33 ist gemäß Figur 3 bzw. 6 an beiden Enden mittels einer Spannplatte 37, 37' mit formschlüssig in den Zahnriemen 33 eingreifender Zahnprofilierung gehalten. Die Spannplatten 37, 37' sind durch an Endplatten 36, 36', die das Hohlprofil 38 an beiden Stirnseiten abschließen, angreifende Spannschrauben 34, 34', gespannt. Der Zahnriemen 33 ist an seinen beiden Enden zusätzlich durch je eine Andruckplatte 35, 35' von außen an die Spannplatten 37, 37' angedrückt. Dadurch ist eine Führung der Spannplatten innerhalb des Hohlprofils sichergestellt. Gleichzeitig sind die beiden zum Grundkörper 10 weisenden Stirnflächen der Andruckplatten 35, 35' als Schaltflächen ausgebildet, die mit den beiden Endbegrenzungsschaltern 19 an den beiden Stirnseiten des Grundkörpers 10 zusammenwirken und somit eine Endabschaltung des Schlittens 11 in beiden Richtungen gewährleisten.

Auf der dem Zahnriemen 33 gegenüberliegenden Außenseite des Hohlprofils 38 ist eine T-Nut 47 vorgesehen, innerhalb derer zusätzliche Anbauteile mit Hilfe handelsüblicher Nutensteine befestigt werden können. Sind keine Anbauteile erforderlich, so wird die T-Nut 47 gemäß Figur 4 mit einem Abdeckblech 40 abgedeckt. Der so entstandene Hohlraum kann als Kabelschacht verwendet werden.

Das Antriebsritzel 30 für den Zahnriemen 33 ist mittels einer Paßfeder 39 mit einer Antriebswelle 41 verbunden. Einzelheiten der Kraftübertragung vom Elektromotor 18 auf das Antriebsritzel 30 sind in den Figuren 4 und 5 dargestellt. Die Antriebswelle 41 ist auf die Motorwelle 45 des Elektromotors 18 aufge steckt und mit dieser über eine Paßfeder 48 formschlüssig verbunden.

Der Aufbau des Drehantriebs ist aus den Figuren 6 bis 9 ersichtlich. Die Endplatte 36', die den Schlitten 11 stirnseitig abschließt, ist auf der dem Zahnriemen 33 gegenüberliegenden Seite nach außen verlängert. Der Elektromotor 60 zum Antrieb der Drehachse 12 ist parallel zum Schlitten 11 an die Endplatte 36' von außen angeflanscht.

Mit der Endplatte 36' ist ein Gehäuse 67 starr verbunden, innerhalb dessen die Lagerung des Drehantriebs, ein Zahnriementrieb zum Antrieb der Drehachse und Endschalter zur Begrenzung der Drehbewegung vorgesehen sind.

Die Drehachse 12 ist mittels eines ersten, von der Endplatte 36' aufgenommenen Kugellagers 61 und mittels eines zweiten im Gehäuse 67 eingebauten Kugellagers 61' gelagert. Am arbeitsseitigen Ende der Drehachse können zusätzliche Gleitführungen oder Loslager vorgesehen sein. Zwischen den beiden Kugellagern 61 und 61' sind eine Zahnscheibe 62 und ein Trapezgewinde 7 drehfest mit der Drehachse 12 verbunden. Die Drehachse 12 liegt mit einem Bund 69 am Innenring des ersten Kugellagers 61 an und ist gemäß Figur 7 am axialen Ende von außen mittels eines Innengewinderings 71 gegen den Innenring des zweiten Kugellagers 61' festgelegt. Der Innenring des zweiten Kugellagers 61' liegt an der Trapezspindel 73 an, diese wiederum an der Zahnscheibe 62, die auf dem Innengewindering des ersten Kugellagers 61 abgestützt ist. Durch Anziehen des Innengewinderings 71 können somit die Trapezspindel 73 und die Zahnscheibe 62 spielfrei vorgespannt werden. Der Außenring des ersten Kugellagers 61 ist gemäß Figur 6 in einer zylindrischen Erweiterung der Endplatte 36' gehalten. Der Außenring des zweiten Kugellagers 61' am axialen Ende der Drehachse 12 ist gemäß Figur 7 durch einen Außengewindering 74 an dem Gehäuse 67 festgelegt. Durch Anziehen des Außengewinderings 74 kann das axiale Spiel der Kugellager 61, 61' eliminiert werden, so daß die Drehachse 12 spielfrei gelagert ist.

Am Innengewindering 71 und am Außengewindering 74 sind je vier Bohrungen 80 bzw. 81 vorgesehen, über die die Gewinderinge von außen über einsteckbare Stifte in einfacher Weise zur Einstellung verdreht werden können.

An der Arbeitsseite der Drehachse 12 ist ein nicht dargestellter Greifer vorgesehen. Die Drehachse 12 ist als Hohlwelle ausgeführt, über die Pneumatikleitungen, Endschalterkabel usw. für das Greifersystem abgeführt werden können, die sich somit nicht im Arbeitsbereich des Greifersystems befinden.

Auf die Motorwelle des Elektromotors 60 ist ein Antriebsritzel 66 aufgesteckt und mit dieser drehfest verbunden. Die Zahnscheibe 62 auf der Drehachse 12 ist vom Antriebsritzel 66 über einen Zahnriemen 63 angetrieben.

Auf der Trapezspindel 73 ist eine Spindelmutter 72 angeordnet. Wie aus Figur 9 ersichtlich, ist die Spindelmutter 72 durch eine plane, an einem Führungsschuh 90 anliegende Führungsfläche 91 gegen Verdrehen gesichert. Eine Verdrehung der Drehachse 12 führt somit zu einer axialen Verschiebung der Spindelmutter 72 auf der Trapezspindel 73. Parallel zur Spindelmutter 72 sind an einem Haltebock 64 zwei induktive Endschalter 65 angeordnet, die von einer planen Schaltfläche an der Spindel mutter 72 betätigbar sind. Durch Verschiebung der Endschalter 65 in Axialrichtung an dem Haltebock 64 lassen sich beliebige Abschaltwinkel für die Drehachse 12 einstellen. Dabei können auch Drehwinkel von mehr als 360° zuverlässig geschaltet werden. Die elektrischen Anschlüsse der Endschalter 65 sind mit einer Buchse 68 in der Außenwand des Gehäuses 67 verbunden und stehen zum zentralen Abgriff bereit.

Da sowohl der Drehantrieb 13 als auch die Drehachse 12 lediglich an der Endplatte 36' befestigt sind und auch die Lagerung der Drehachse 12 in die Endplatte 36' bzw. an das daran befestigte Gehäuse 67 eingebaut ist, ist die gesamte Dreheinheit als selbständige Funktionseinheit ausgebildet. Somit kann eine Lineareinheit nach Austausch der Endplatte 36' des Schlittens 11 nachträglich in eine kombinierte Linear- und Dreheinheit umgerüstet werden.

**Figurenlegende**

10 Grundkörper
11 Schlitten
12 Drehachse
13 Drehantrieb
14 Rundstange
18 Elektromotor
30 Antriebsritzel
31 Führungsrolle
32 Endschalter
33 Zahnriemen
34, 34' Spannschraube
35, 35' Andruckplatte
36, 36' Endplatte
37, 37' Spannplatte
38 Hohlprofil
39 Paßfeder
40 Abdeckblech
41 Antriebswelle
42 Laufbuchse
43 Zwischenflansch
44 Antriebsritzel
45 Motorwelle
46 Innenraum
47 T-Nut
48 Paßfeder
60 Elektromotor
61, 61' Kugellager
62 Zahnscheibe
63 Zahnriemen
64 Haltebock
65 Endschalter
66 Antriebsritzel
67 Gehäuse
68 Buchse

69 Bund
80 Bohrung
81 Bohrung
71 Innengewindering
72 Spindelmutter
73 Trapezspindel
74 Außengewindering
90 Führungsschuh
91 Führungsfläche
92 Schaltfläche

**Ansprüche**

1. Linear- und Dreheinheit, mit einem Grundkörper, an dem ein Schlitten mit einem Hohlprofil mittels einer Antriebseinrichtung verfahrbar ist, wobei auf dem Schlitten eine über einen Drehantrieb angetriebene Drehachse vorgesehen ist, dadurch gekennzeichnet, daß die Drehachse (12) innerhalb des Hohlprofils (38) des Schlittens (11) angeordnet ist.

2. Linear- und Dreheinheit nach Anspruch 1, dadurch gekennzeichnet, daß die Dreheinheit mit der Drehachse (12) und dem Drehantrieb (13) als selbständige Funktionseinheit ausgebildet ist.

3. Linear- und Dreheinheit nach Anspruch 1 oder 2, dadurch gekennzeichnet, daß am Schlitten (11) ein beidseitig eingespannter, feststehender Zahnriemen (33) vorgesehen ist, der von einem Elektromotor (18) über ein Antriebsritzel (44) am Grundkörper (10) antreibbar ist.

4. Linear- und Dreheinheit nach Anspruch 1, 2 oder 3, dadurch gekennzeichnet, daß der Innenraum (46) des Hohlprofils (38), in dem die Drehachse (12) angeordnet ist, durch den Zahnriemen (33) nach außen abgeschlossen ist.

5. Linear- und Dreheinheit nach Anspruch 4, dadurch gekennzeichnet, daß an der dem Zahnriemen (33) gegenüberliegenden Außenseite des Hohlprofils (38) eine T-Nut (47) vorgesehen ist.

6. Linear- und Dreheinheit nach Anspruch 3, 4 oder 5, dadurch gekennzeichnet, daß an den beiden Seitenflächen des Hohlprofils (38) Rundstangen (14) vorgesehen sind, die in Laufbuchsen (42) des Grundkörpers (10) geführt sind.

7. Linear- und Dreheinheit nach Anspruch 4, 5 oder 6, dadurch gekennzeichnet, daß die Zahnseite des Zahnriemens (33) zum Innenraum (46) des Hohlprofils (38) weist und im Grundkörper (10) mittels zweier Führungsrollen (31) an das Antriebsritzel (30) des Elektromotors (18) angedrückt ist.

8. Linear- und Dreheinheit nach einem der Ansprüche 3 bis 6, dadurch gekennzeichnet, daß der Zahnriemen (33) beidseitig mittels einer Spannplatte (37, 37') mit formschlüssig in den Zahnriemen (33) eingreifender Zahnprofilierung durch eine Spannschraube (34, 34') an einer Endplatte (36, 36') des Hohlprofils (38) gehalten ist.

9. Linear- und Dreheinheit nach Anspruch 8, dadurch gekennzeichnet, daß der Zahnriemen (33) an seinen beiden Enden durch je eine Andruckplatte (35, 35') von außen an die Spannplatte (37, 37') angedrückt ist.

10. Linear- und Dreheinheit nach Anspruch 9, dadurch gekennzeichnet, daß an den beiden Enden des Grundkörpers (10) Endschalter (32) vorgesehen sind, die durch die Stirnflächen der Andruckplatten (35, 35') betätigbar sind.

11. Linear- und Dreheinheit nach einem der vorhergehenden Ansprüche, dadurch gekennzeichnet, daß eine Zahnscheibe (62) mit der Drehachse (12) starr verbunden ist, die vom Antriebsritzel (66) eines Elektromotors (60) über einen Zahnriemen (63) antreibbar ist.

12. Linear- und Dreheinheit nach einem der vorhergehenden Ansprüche, dadurch gekennzeichnet, daß die Drehachse (12) mittels zweier Kugellager (61, 61') am Gehäuse (67), das mit dem Ende des Schlittens (11) starr verbunden ist, gelagert ist.

13. Linear- und Dreheinheit nach einem der vorhergehenden Ansprüche, dadurch gekennzeichnet, daß eine Trapezspindel (73), von der eine Spindelmutter (72) angetrieben ist, mit der Drehachse (12) drehfest verbunden ist.

14. Linear- und Dreheinheit nach Anspruch 13, dadurch gekennzeichnet, daß die Spindelmutter (72) durch eine plane, an einem Führungsschuh (90) anliegende Führungsfläche (91) gegen Verdrehen gesichert ist.

15. Linear- und Dreheinheit nach Anspruch 12, 13 oder 14, dadurch gekennzeichnet, daß zwei von der Spindelmutter (72) betätigbare Endschalter (65) zur Begrenzung des Drehwinkels der Drehachse (12) vorgesehen sind.

16. Linear- und Dreheinheit nach einem der Ansprüche 13 bis 15, dadurch gekennzeichnet, daß die Zahnscheibe (62) und die Spindelmutter (72) zwischen dem ersten Kugellager (61) und dem zweiten Kugellager (61') angeordnet sind und daß die Drehachse (12) durch einen am Innenring des ersten Kugellagers (61) anliegenden Bund (69) der Drehachse (12) und durch einen gegen den Innenring des zweiten Kugellagers (61') festziehbaren Innengewindering (71) in Axialrichtung festgelegt ist.

17. Linear- und Dreheinheit nach Anspruch 16, dadurch gekennzeichnet, daß der Außenring des ersten Kugellagers (61) in der Endplatte (36') des Schlittens (11) gehalten ist und daß der Außenring des zweiten Kugellagers (61') von einem in das Gehäuse (67) eingeschraubten Außengewindering (74) gehalten ist.

18. Linear- und Dreheinheit nach einem der vorhergehenden Ansprüche, dadurch gekennzeichnet, daß die Drehachse (12) als Hohlwelle ausgebildet ist.

19. Linear- und Dreheinheit nach Anspruch 18, dadurch gekennzeichnet, daß am freien Ende der Drehachse (17) ein Betätigungsorgan vorgesehen ist, dessen Steuerleitungen durch die Drehachse geführt sind.

Fig. 1

Fig. 2

0-360°

Fig. 3

Fig. 4

Fig. 5

EP 0 391 310 A2

Fig. 6

Fig. 7

Fig. 8

Fig. 9

EP 0 391 310 A2